# EUROPÄISCHE PATENTSCHRIFT

(11) **EP 0 525 524 B1**
(45) Veröffentlichungstag und Bekanntmachung des Hinweises auf die Patenterteilung: **17.01.1996**
(21) Anmeldenummer: 92112137.2
(22) Anmeldetag: 16.07.1992
(51) Int. Cl.: A23G 1/18

(54) **Verfahren und Vorrichtung zur kontinuierlichen, gesteuerten Strukturierung, insbesondere Kristallisation von Stoffsystemen in fliessfähigem Zustand, insbesondere fetthaltigen Massen, wie Schokolademasse**
Method and apparatus for continuous and controlled texturing, particularly crystallisation of liquid masses, especially fat containing masses, such as chocolate paste
Méthode et dispositif pour texturer d'une manière continue et contrôlée, en particulier pour la cristallisation de masses liquides, spécialement de masses contenant des graisses, comme la pâte de chocolat

(30) Priorität: 01.08.1991 DE 4125463
(43) Veröffentlichungstag der Anmeldung: 03.02.1993
(73) Patentinhaber: DEUTSCHES INSTITUT FüR LEBENSMITTELTECHNIK e.V., D-49610 Quakenbrück (DE); SCHRöDER & CO. MASCHINENFABRIK, D-23564 Lübeck (DE)
(72) Erfinder: Windhab, Erich, Dr. Ing., W-4570 Quakenbrück (DE); Rolfes, Ludwig, Dipl.-Ing., W-4573 Löningen (DE); von Holdt, Peter, Dipl.-Ing., W-2401 Gross Grönau (DE); Hahn-Kaufmann, Lutz, W-2401 Gross Grönau (DE)
(74) Vertreter: Fleck, Thomas, Dr. Dipl.-Chem.

(56) Entgegenhaltungen:
- EP-A- 0 140 729
- EP-A- 0 237 168
- EP-A- 0 379 237
- DE-A- 4 004 491
- CONFECTIONERY PRODUCTION Bd. 54, Nr. 12, Dezember 1988, SURBITON GB Seiten 718 - 719 , XP000024479 R. EBERHARDT '"The tempering process. Analysis and solution"'
- CONFECTIONERY PRODUCTION Bd. 56, Nr. 7, Juli 1990, SURBITON GB Seiten 510 - 511 , XP000138274 P. SAWITZKI '"The Kreuter Betamat process"'

## Beschreibung

Die Erfindung betrifft ein Verfahren und eine Vorrichtung nach dem Oberbegriff des Anspruches 1 bzw. 2. Ein derartiges Verfahren ist aus der DE-A-40 04 491 und eine derartige Vorrichtung aus der EP-A-0 140 729 bekannt.

Ferner sind Energieeintragungssysteme bekannt, die mit Energiedissipation infolge von Scherspannung arbeiten (vgl. hierzu "Confectionary Production", Bd. 54, Nr. 12).

Viele Nahrungsmittelprodukte enthalten neben anderen Rohstoffen in unterschiedlichen Prozentsätzen tierische und/oder vegetabile Öle und/oder Fette oder Gemische daraus (z.B. Schokolade, Butter, Margarine) in kristallisierter Form. Diese kristallisierbaren Stoffsysteme geben den Endprodukten ihre wesentlichen und charakteristischen Eigenschaften.

Bisher werden kristallisierbare Stoffsysteme häufig in thermisch gesteuerten Schabe-Wärmeaustauschern oder in doppelwandigen Behältern (mit Mantelkühlung und mit Rührwerk mit Schabern versehen) mehr oder weniger schnell bei mechanischer Mischung unter den Erstarrungspunkt abgekühlt. Fette und Fettmischungen haben meist die Eigenschaft, durch variable Konfiguration der Fettmoleküle verschiedene polymorphe Strukturen ihrer Fettkristalle zu bilden (z.B. bei Kakaobutter α, γ, β', β-Kristallmodifikation). Diese Modifikationen haben sehr unterschiedliche Stabilität und sind verantwortlich für die Konsistenz, Textur, Oberflächenglanz (z.B. bei Schokolade) und mechanischen Eigenschaften des Endproduktes (hart-weich, kurze-lange Struktur, plastisch/elastisch-brüchig, klebrig-trocken, sandig-glatt).

In den bisher bekannten Maschinen und Apparaten wird die Temperatur-Verweilzeit-Kontrolle und die Temperaturgradienten beim Kühlen und evtl. Wiedererwärmen durch Beheizung nur empirisch für verschiedene Stoffsysteme eingestellt. Die definierten Kristallmodifikationen zur Erreichung bestimmter Eigenschaften können so nur zufällig erhalten werden.

Eine solche Vorrichtung ist beispielsweise aus der DE-PS 39 13 941 und aus der EP-OS 289 849 bekannt.

Als Maß für die Mischintensität werden Schergefälle von 500 - 4000 s⁻¹ erzeugt. Bezüglich der quadratisch von der Drehzahl und damit dem Schergefälle abhängigen dissipierten mechanischen Energie bedeutet dies maximal unterschiedliche Konditionen um den Faktor 64. Von einem gezielten mechanischen Energieeintrag kann bei den ablaufenden, sehr sensiblen Kristallisationsvorgängen hier nicht die Rede sein. Im übrigen ist die Bedeutung der Größe "Schergefälle" auf laminare Schichtenströmungen begrenzt, so daß die hier verwendete Quantifizierung einer "Mischverwirbelung" mit Angaben über das Schergefälle nicht beschrieben werden kann.

An einen gezielten Einsatz dissipierter mechanischer Energie als "Wärmequelle" sowie die strukturinduzierende Wirkung einer nicht verwirbelten echten Scherströmung ist hier nicht gedacht worden.

Aus der älteren, nicht vorveröffentlichten DE-P-41 03 575.5 ist ein Verfahren zur Kristallisation von Rahm oder Butter bekanntgeworden, durch das die Streichfähigkeit des Endproduktes verbessert wird. Dieses Verfahren arbeitet mit einem mechanischen Energieeintrag in einem sog. "Scherspaltkristallisator", der aus einem Außenzylinder und einem konzentrischen Innenzylinder besteht, der drehantreibbar ist.
Hier wird ein konstanter mechanischer Energieeintrag zu homogenen Mischzwecken präsentiert. An eine dissipationsgesteuerte Fahrweise durch Drehzahlsteuerung ist nicht gedacht. Die thermische Prozeßbeeinflussung erfolgt wie in anderen herkömmlichen Kristallisationsverfahren allein durch entsprechende Temperierung mittels Heiz-/Kühlmedium.

Der Erfindung liegt nun die Aufgabe zugrunde, ein Verfahren und eine Vorrichtung der eingangs genannten Art zu schaffen, durch die die Erreichung bestimmter, gewünschter Kristallmodifikationen und damit gewünschter Eigenschaften des Endproduktes in reproduzierbarer Weise möglich ist.

Diese Aufgabe wird grundsätzlich bei einem Verfahren durch das Kennzeichen des Anspruches 1 und bei einer Vorrichtung zur Durchführung des Verfahrens durch das Kennzeichen des Anspruches 2 gelöst.

Erfindungsgemäß wird praktisch eine Tieftemperatur-Scherkristallisation durchgeführt, d.h. kristallisierbare Stoffsysteme werden einer mechanisch induzierten Tieftemperatur-Kristallisation unterzogen. Die Kühlung erfolgt im Falle der Erfindung auf im Vergleich zum Stand der Technik extrem tiefe Kristallisationstemperaturen. Durch die gleichzeitige "Gegensteuerung" durch Erwärmung mit Hilfe des homogenen mechanischen Energieeintrags wird in überraschender Weise ein einwandfreies Produkt mit überwiegend stabilen Kristallformen in extrem verkürzten Zeiten erreicht. Die Erwärmung durch den mechanischen Energieeintrag erfolgt unmittelbar und ohne praktisch nennenswerte Verzögerung, so daß eine entsprechend sensible Steuerung, beispielsweise durch Viskositätsmessung des behandelten Stoffsystems, möglich ist.

In anderen Worten, die Kühlung des zu kristallisierenden Stoffsystems erfolgt erfindungsgemäß derart massiv, daß es sich unter ruhenden Bedingungen als Stoffsystem spontan verfestigen würde. Durch den mechanischen Energieeintrag, der aufgrund der ausgeführten Spaltgeometrie homogen erfolgt, wird im Stoffsystem gleichmäßig Energie dissipiert. Dies führt zur Erwärmung des Stoffsystems, welches der spontanen Kristallisation bei der angelegten tiefen Kühltemperatur entgegenwirkt. Gleichzeitig bewirkt die Scherströmung bei derart gewählten tiefen Temperaturen insbesonderedie Initiierung ausgeprägter Orientierungszustände makromolekularer Bestandteile, welche damit offensichtlich bevorzugte "Positionen" zur Ausbildung kristalliner Strukturen einnehmen. Die scherinduzierte Ausrichtung molekularer Einheiten sowie die gleichzeitige extreme Unterkühlung an der kontaktierenden Behälterwand bewirken eine extrem starke Beschleunigung von Kristallkeimbildung und Kristallwachstum.

Im Gegensatz zum Stand der Technik realisiert der erfindungsgemäße Gegenstand einen homogenen mechanischen Energieeintrag aufgrund des Konstruktionsmerkmals einer über den gesamten Beanspruchungsquerschnitt konstanten Scherspaltweite. Dies bewirkt, daß an jeder beliebigen Stelle des Scherspaltes, in welchem die zu kristallisierende Masse beansprucht wird, der mechanische Energieeintrag weitestgehend konstant ist, d.h. im Stoffsystem wird gleichzeitig Energie dissipiert.

Die schnelle Kristallkeimbildung führt zu einer großen Anzahl von Keimen und verhindert damit die Bildung weniger, jedoch groß gewachsener Kristalle (Sandigkeit des Endproduktes). Außerdem kann die überwiegende Bildung gewünschter stabiler oder instabiler Kristallmodifikationen bei polymorphem Kristallisieren des Stoffsystems über die eingebrachte Scherenergie definiert eingestellt werden. Die in der erfindungsgemäßen Vorrichtung stark beschleunigte Kristallisationskinetik ermöglicht damit die Realisierung kleiner "Reaktionsvolumina" (freies Kristallisatorvolumen), welches kontinuierlich durchströmt werden kann. Es werden für bestimmte definierte Stoffsysteme kürzere Kristallisationszeiten, kleinere Wärmeaustauschflächen und Reaktionsbehälter, weniger Kühlenergie und weniger elektrische Energie aufgrund kleinerer Geräte benötigt. Beispielhaft untersuchte Stoffsysteme aus dem Fettbereich (Kakaobutter) weisen Kristallisationszeiten auf, welche gegenüber der herkömmlichen Kristallisationsbehandlung um mehr als den Faktor 100 verkürzt sind.

Die Regelung ist in keiner Weise träge, sondern kann ohne Schwierigkeiten so schnell und sensibel erfolgen, daß ein gleichmäßiges Produkt erzeugt wird. Dieses geschieht bei der erfindungsgemäßen Vorrichtung durch Regelung der Drehzahl des Rotors. Diese Regelung ist kurzfristig und massiv in jedem gewünschten Ausmaß möglich, so daß eine extrem kurze Manipulation der energetischen Bedingungen im Scherspalt gegeben ist. Für die Festlegung eines definierten mechanischen Energieeintrags sind die Verweilzeit des Produktes im Spalt, d.h. die Spaltgeometrie, der Produktvolumenstrom und die Drehzahl der Welle, maßgeblich.

Unter "Scherströmung" in dieser Beschreibung wird eine glatte Strömung verstanden, bei welcher die molekularen Bausteine des Stoffsystems in parallelen "Schichten" relativ zueinander bewegt und ausgerichtet werden. Diese Ausrichtung erzeugt projizierte Positionen der stofflichen Bausteine (z.B. Fettmoleküle) zueinander, welche das "Einklinken" in ein Kristallgitter erleichtern. Damit wird die Kristallisationskinetik wesentlich beschleunigt.

Die Vorrichtung nach der Erfindung ist so ausgebildet, daß eine optimale Ausnutzung des mechanischen Energieeintrags als Regelparameter für die Kristallisationskonditionen möglich ist. In Abhängigkeit von einer definierten Viskositätsvorgabe wird die Vorrichtung sozusagen "viskositätsgesteuert" und zwar über die Veränderung des mechanischen Energieeintrags, d.h. der Drehzahl des Rotors.

Bei der nach der Erfindung durchgeführten "starken Kühlung" der Behälterwand wird die Gefahr des "Einfrierens" dadurch vermieden, daß die zu kristallisierende Masse allein an der Kontaktfläche den "Tieftemperaturschock" erlebt, dadurch mit hoher Geschwindigkeit Kristallkeime bildet, diese jedoch mit der nicht die Wand kontaktierenden Masse eine Mischungstemperatur ausbilden, was eine schnelle Weiterverfestigung vermeidet. Der mechanische Energieeintrag muß derart bemessen sein, daß eine zu starke lokale Erwärmung vermieden wird, um ein Wiederaufschmelzen der gebildeten, gewünschten stabilen Kristalle zu unterbinden.

Die erfindungsgemäße Vorrichtung liefert gegenüber der bekannten Verfahrensweise zur Kristallisation einer Vielzahl makromolekularer Stoffsysteme wesentliche Zeitvorteile (bis Faktor 100) sowie erhebliche wirtschaftliche Vorteile aufgrund verringerter Investitionen, welche durch das deutlich verringerte Kristallisatorvolumen bedingt sind. Gegenüber bekannten Vorrichtungen ist prinzipiell nur eine Temperierzone (bzw. Temperaturzone) (nur Kühlung) gegenüber bislang 2 - 3 Zonen (Kühlung und Heizung) notwendig. Die vorkristallisierte Masse verläßt die Vorrichtung mit definierter Viskosität in einem direkt verarbeitbaren Zustand (ohne Nacherwärmung).

Im folgenden wird die Erfindung unter Hinweis auf die Zeichnung anhand einer Prinzipskizze und von Ausführungsbeispielen näher erläutert.

Es zeigt:
- Fig. 1: eine schematische Darstellung des Prozeßkreislaufes;
- Fig. 2: den in Fig. 1 schematisch dargestellten Kristallisator im Längsschnitt;
- Fig. 3: Schmelzenthalpiekurven für das Produktbeispiel Kakaobutter; und
- Fig. 4: ein Schaubild für das Beispiel "Kakaobutter" bei dem die Verweilzeit im Kristallisator als Funktion der Kühltemperatur bei eingestellten Viskositäten aufgetragen ist.

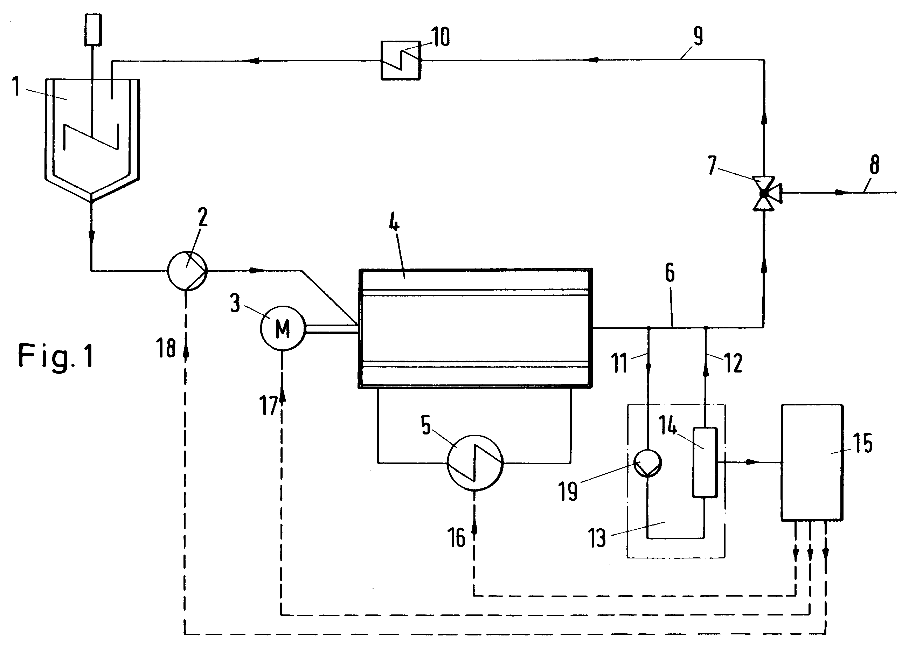

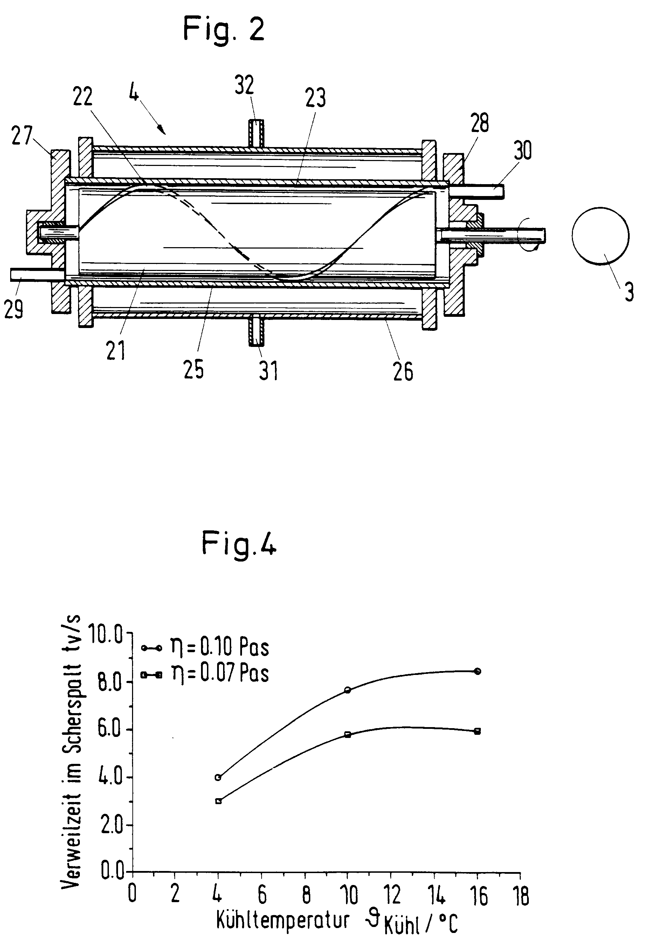

Die in Fig. 1 schematisch dargestellte Vorrichtung besteht aus einem temperierten Behälter mit Rührer für die Vorhaltung des Stoffsystems, beispielsweise Kakaobutter. Die zu behandelnde Masse gelangt über eine Pumpe 2 in den Behälter oder Kristallisator 4, der auch vollständig als "Tieftemperaturscherkristallisator" bezeichnet werden kann. In dem Kristallisator 4 ist ein Rotor 21 (siehe Fig. 2) angeordnet, der durch einen Motor 3 drehantreibbar ist. Der Kristallisator 4 weist einen Kühlmantel mit einem Kühlkreislauf 5 auf.

Die behandelte Masse gelangt über eine Hauptstromleitung 6 zu einem Dreiwegeventil 7 und von dort entweder in den Produktstrom 8 oder in den Rücklauf 9, in dem ein Wärmetauscher 10 angeordnet ist.

Parallel zu dem Hauptstrom 6 verläuft eine Bypassleitung mit Einlauf 11 und Rücklauf 12. Diese Leitung führt in eine Viskositätsmessung 13 mit einem on-line-Viskositätsmeter 14. Die Steuerung und Regelung erfolgt durch eine entsprechende Einheit 15. Die Kühlung wird bei 16, die Drehzahl bei 17 und der Massenstrom bei 18 gesteuert. Mit 19 ist die Pumpe für die Viskositätsmessung 13 bezeichnet.

In Fig. 2 ist der Rehälter oder Kristallisator 4 im Schnitt dargestellt. Dieser besteht aus dem Rotor 21 mit einer flachen Schnecke 22. Zwischen dem Rotor 21 und der Innenwand des Behälters ist der Scherspalt 23 definiert, in dem die Scherspannung auf das zu behandelnde Produkt ausgeübt wird. Der ortsfeste Zylinder besteht aus einer inneren Kühlwand 25 und einem äußeren Kühlmantel 26. Die Kühlmittelzufuhr erfolgt bei 31 und die Kühlmittelabfuhr bei 32. Die Stirnwände des Zylinders werden durch einen Lagerdeckel 27 und einen Verschlußdeckel 28 gebildet. Sie dienen der Lagerung des durch den Motor 3 regelbar angetriebenen Rotors 21. Die Produktzufuhr erfolgt bei 29 und der Austritt des behandelten Produktes bei 30.

Der Kristallisator kann im Rahmen der Erfindung auch anders ausgebildet sein, beispielsweise ist auch eine Kühlung des Rotors durch eine entsprechende Hohlwellenausbildung denkbar. Gegebenenfalls können auch Mantel und Rotor gekühlt werden. Wesentlich ist, daß die Erwärmung durch mechanischen Energieeintrag mit Hilfe des Rotors in dem Scherspalt 23 erfolgt.

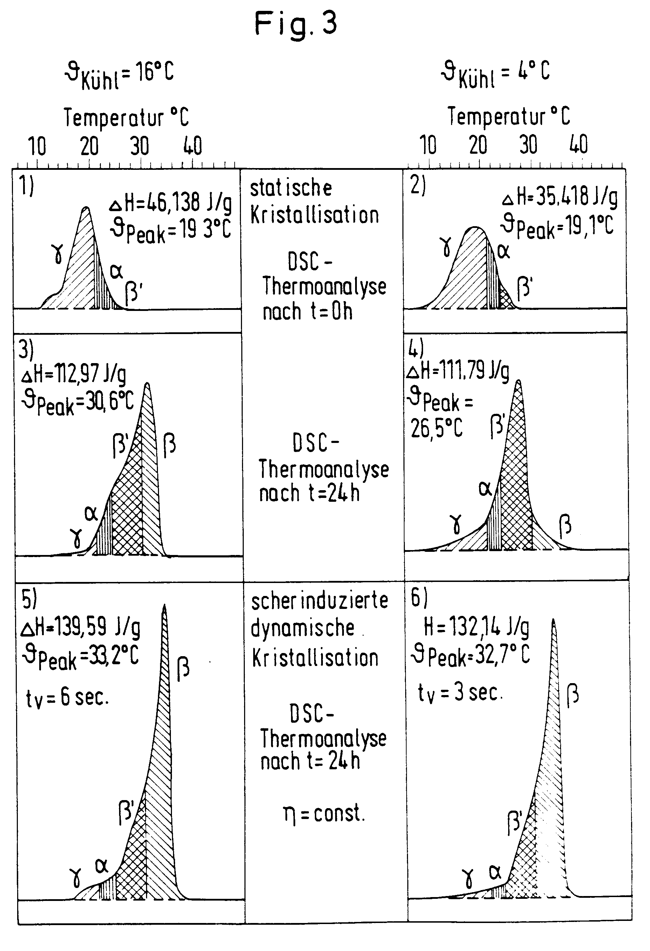

Fig. 3 zeigt Schmelzenthalpiekurven, welche mittels Differentialthermoanalyse (DSC) ermittelt wurden. Diese analytische Methode erlaubt die eindeutige Unterscheidung und Quantifizierung der entstehenden Kristallmodifikationen γ, α, β', β für Fette (hier Kakaobutter).

Um bei kakaobutterhaltigen Lebensmitteln (z.B. Schokolade, Fettglasuren, .....) die geforderte Qualität (Oberflächenglanz; knackiger Bruch; glatter Schmelz) zu erreichen, ist es notwendig, die Kakaobutter (bzw. das kakaobutterhaltige Stoffsystem) derart zu kristallisieren, daß die stabilen β-Kristalle präferiert gebildet werden (ca. > 50 - 60 % β-Kristalle < 10 % γ, α-Kristalle).

Für die Verarbeitung entsprechender Massen in fließfähiger Form (Ausgießen, Überziehen, Einmischen) ist angestrebt, bei möglichst definierter Viskosität zu arbeiten, um reproduzierbare Produktionsführung und Produktqualität zu erzeugen. Derartige Massen werden in der Regel in sogenannter "vorkristallisierter" oder "temperierter" Form verarbeitet. Dies bedeutet, daß die in diesem Zustand vorliegenden Kristalle überwiegend stabile β-Kristalle sein müssen und der Anteil dieser Kristalle derart bemessen ist, daß die fließfähig zu verarbeitende Masse die gewünschte Viskosität besitzt. In der Regel liegt der Kristallanteil vorkristallisierter Massen bei ca. ≦ 5 Vol.%. Die für die Vorkristallisation üblicherweise gewählte Kühltemperatur beträgt bei kakaobutterhaltigen Fluiden 25 - 29°C (Massetemperatur) bei 16 - 25°C Wandtemperatur. Die Behandlungszeiten betragen ca. 10 - 30 Minuten. Eine definierte Viskositätseinstellung ist bislang nicht möglich, sondern kann nur näherungsweise über die Temperatureinstellung erfolgen, da der Prozeß über die Verweilzeit (bzw. Durchfluß) festgelegt ist.

Im Gegensatz zu dieser herkömmlichen Vorgehensweise wählt das neue Tieftemperaturscherkristallisationsverfahren extrem tiefe Kristallisationstemperaturen (vgl. Fig. 3: 2 Beispiele → 16 und 4°C). Bei statischer Erstarrung von Kakaobutter bei diesen beispielhaft gewählten Temperaturen zeigt sich direkt nach der Erstarrung ein sehr instabiles "Kristallgefüge" (vgl. F. 3.1 und 3.2 überwiegend γ und α-Form), welches auch nach 24 Stunden Lagerung noch deutlich instabile Merkmale aufweist (vgl. Fig. 3.3 und 3.4 zu wenig β; überwiegend β' und α). Die bei 4°C erstarrte Probe ist nach 24 Stunden verstärkt instabil kristallisiert.

Derartige statisch erstarrte Proben zeigen eine Fülle an negativen Qualitätsmerkmalen (Fettreif; weicher Bruch; Rauhigkeit; ....).

Wird unter gleichen Temperaturkonditionen bei der Tieftemperaturscherkristallisation definierter mechanischer Energieeintrag als "Gegensteuerung" zur temperaturinduzierten Erstarrung eingesetzt, wird ein einwandfreies Produkt mit überwiegend stabilen Kristallformen (β) (vgl. Fig. 3.5 und 3.6) erreicht. Die Güte dieser Produkte kann von solchen in herkömmlichen Prozessen erzeugten nicht unterschieden werden. Als wesentlicher Unterschied zur herkömmlichen Verfahrensweise resultieren jedoch einerseits der Vorteil einer leicht definiert einzustellenden Viskosität, da der mechanische Energieeintrag als Steuerparameter eine schnelle und gezielte Einflußnahme erlaubt und andererseits sehr stark verkürzte Behandlungszeiten, welche im aufgeführten Beispiel bei 3 bzw. 6 Sekunden liegen, und damit um den Faktor ≧ 100 gegenüber herkömmlichen Verfahren reduziert sind. Dies hat sehr wirtschaftliche Baugrößen zur Folge.

Fig. 4 zeigt für Kakaobutter ein Kennfeld, in welchem für zwei beispielhaft definiert eingestellte Viskositäten (η = 7 . 10⁻² bzw. 1,0 . 10⁻¹ Pas) die Verweilzeit im Kristallisator als Funktion der Kühltemperatur aufgetragen sind.

## Patentansprüche

1. Verfahren zur kontinuierlichen, gesteuerten Strukturierung, insbesondere Kristallisation von Stoffsystemen in fließfähigem Zustand, insbesondere fetthaltigen Massen, wie Schokolademasse, durch eine thermische Behandlung durch Kühlung und dieser entgegenwirkenden Erwärmung, wobei die Kühlung derart stark erfolgt, daß das Stoffsystem im Ruhezustand sich spontan verfestigen würde, dadurch gekennzeichnet, daß die Erwärmung durch mechanischen, regelbaren Energieeintrag infolge Scherspannung durch Energiedissipation erfolgt, und daß die Kühlung und die dieser entgegenwirkende Erwärmung gleichzeitig erfolgen.

2. Vorrichtung zur Durchführung eines Verfahrens zur kontinuierlichen, gesteuerten Strukturierung, insbesondere Kristallisation von Stoffsystemen in fließfähigem Zustand, insbesondere fetthaltigen Massen, wie Schokolademase, mit einem kontinuierlich durchfließbaren Behälter (4)zur Durchführung einer thermischen Behandlung, der eine Kühlrichtung in seiner Wand und einen drehangetriebenen Rotor (21) zum mechanischen Energieeintrag aufweist, wobei der Rotor (21) mit der Behälterwand einen Spalt zur Übertragung einer Scherspannung bildet, und seine Drehgeschwindigkeit zur unmittelbaren Beeinflussung des mechanischen Energieeintrags regelbar ist, dadurch gekennzeichnet, daß die Drehgeschwindigkeit des Rotors auf Basis einer on-line-Viskositätsmessung des behandelten Stoffsystems regelbar ist.

3. Vorrichtung nach Anspruch 2, dadurch gekennzeichnet, daß für das behandelte Stoffsystem nach dem Austritt aus dem Behälter (4) ein Bypass (11,12) zur Durchführung der Viskositätsmessung (bei 14) vorgesehen ist.

4. Vorrichtung nach einem oder mehreren der vorstehenden Ansprüche 2 und 3, dadurch gekennzeichnet, daß das freie Reaktionsvolumen im Scherspalt (23) 0,1 bis 50 l, vorzugsweise 0,25 bis 10 l, pro 1000 l/h Durchsatzmenge des Stoffsystems beträgt.

5. Vorrichtung nach einem oder mehreren der vorstehenden Ansprüche 2 bis 4, dadurch gekennzeichnet, daß die Wandtemperatur bei kristallisierenden Systemen 1 bis 70°C, vorzugsweise 10 bis 50°C, unterhalb der typischen Erstarrungstemperatur entsprechender Komponenten des Stoffsystems liegt.

## Claims

1. A process continuously controlling the texture, especially the crystallization of food material systems in the fluid state, especially fatty masses, like chocolate masses, by thermal treatment by cooling and counteractive heating, wherein the cooling is effected to such an extent that when the material system is in a state of rest it spontaneously solidifies characterized in that heating is effected by means of energy dissipation through a mechanically adjustable energy supply resulting from shearing stress, and that cooling and said counter-active heating result simultaneously.

2. An apparatus for continuously controlling the texture especially crystallization of food material systems in the fluid state, especially fatty masses, like chocolate masses by thermal tratment within a continuous flow container (4) for effecting thermal treatment which comprises cooling means in its container wall and a revolving rotor (21) for supply of mechanical energy whereby said rotor (21) with the container wall forms a gap for the transfer of shearing stress and its rotational speed being adjustable for the direct control of the mechanical energy supply, characterized in that the rotational speed of the rotor is adjustable on the basis of the on-line viscosity measuring of the treated material system.

3. An apparatus according to claim 2 characterized in that a bypass (11,12) for the treated material system is provided after an outlet from the container (4) for conducting a viscosity measurement (at 14).

4. An apparatus according to claims 2 and 3 characterized in that the free reaction volume in the shearing gap (23) amounts to 0.1 to 50 liters, preferably 0.25 to 10 liters per 1,000 l/h of throughput of the material system.

5. An apparatus according to one or more of the preceeding claims 2 to 4 characterizing in that means for the wall temperature of crystallizing systems is in a range of from 1 to 70°C, especially 10 - 50°C, below the freezing temperature of the components of the material system.

## Revendications

1. Procédé pour la structuration commandée continue, en particulier pour la cristallisation de systèmes de substances à l'état coulant, en particulier de masses contenant de la grasse, comme la masse de chocolat, par un traitement thermique par refroidissement et réchauffement qui agit à l'encontre de celui-ci, le refroidissement étant effectué de manière tellement forte que le système de substances à l'état de repos se consoliderait spontanément, caractérisé en ce que le réchauffement est effectué par apport mécanique d'énergie, réglable, par suite de contrainte de cisaillement par dissipation d'énergie, et que le refroidissement et le réchauffement qui agit à l'encontre de celui-ci se font simultanément.

2. Dispositif pour réaliser un procédé de structuration commandée continue, en particulier pour la cristallisation de systèmes de substances à l'état coulant, en particulier de masses contenant de la grasse, comme la masse de chocolat, avec un récipient (4) qui peut être traversé continuellement pour réaliser un traitement thermique, qui présente un sens de refroidissement dans sa paroi et un rotor (21) entraîné en rotation pour l'apport mécanique d'énergie, le rotor (21) formant avec la paroi du récipient une fente pour la transmission d'une contrainte de cisaillement et sa vitesse de rotation étant réglable pour l'influence directe de l'apport mécanique d'énergie, caractérisé en ce que la vitesse de rotation du rotor est réglable sur la base d'une mesure de la viscosité en ligne du système de substances traité.

3. Dispositif selon la revendication 2, caractérisé en ce que pour le système de substances traité une dérivation (11, 12) pour réaliser la mesure de la viscosité (en 14) est prévue après la sortie du récipient (4).

4. Dispositif selon l'une ou plusieurs des revendications précédentes 2 et 3, caractérisé en ce que le volume de réaction libre dans la fente de cisaillement (23) est de 0,1 à 50 l, de préférence 0,25 à 10 l, par 1000 l/h de quantité passée du système de substances.

5. Dispositif selon l'une ou plusieurs des revendications précédentes 2 à 4, caractérisé en ce que la température de la paroi des systèmes de cristallisation est d' 1 à 70° C, de préférence de 10 à 50° C, au-dessous de la température de solidification typique des composants correspondants du système de substances.
